# EUROPEAN PATENT SPECIFICATION

(11) **EP 0 919 647 B1**
(45) Date of publication and mention of the grant of the patent: **25.04.2007**
(21) Application number: 98122377.9
(22) Date of filing: 25.11.1998
(51) Int. Cl.: C30B 29/22, B64G 1/50, G02F 1/01

(54) **Thermal control device**
Thermische Steuerungseinrichtung
Dispositif de contrôle du flux thermique

(30) Priority: 25.11.1997 JP 32254997; 29.09.1998 JP 27482698
(43) Date of publication of application: 02.06.1999
(73) Proprietor: NEC TOSHIBA Space Systems, Ltd., Yokohama, Kanagawa 224-8555 (JP)
(72) Inventor: Okamoto, Akira c/o NEC Corporation, Tokyo (JP); Shimakawa, Yuichi c/o NEC Corporation, Tokyo (JP); Manako, Takashi c/o NEC Corporation, Tokyo (JP)
(74) Representative: von Samson-Himmelstjerna, Friedrich

(56) References cited:
- EP-A- 0 526 767
- EP-A- 0 710 735
- JP-A- 3 088 302
- US-A- 3 409 247
- US-A- 3 565 671
- US-A- 4 707 412
- US-A- 5 095 384
- US-A- 5 330 708
- US-A- 5 433 056
- US-A- 5 669 584
- HASHIMOTO ET AL.: "CRYSTAL GROWTH AND CHARACTERIZATION OF La1-xMxMnO3 (M=Ca, Sr)" JOURNAL OF CRYSTAL GROWTH, vol. 84, no. 2, - August 1987 pages 207-211, XP002005875 Amsterdam, The Netherlands
- INSPEC/IEE [online], abstract AN4201918 of HENDRIX B C et al: *dUnderstanding doped V2O3 as a functional positive temperature coefficient material*d, Journal of Materials Science: Materials in Electronics, June 1992, UK, vol. 3, no. 2, pages 113 - 119, ISSN 0957-4522

## Description

### BACKGROUND OF THE INVENTION

The present invention relates to a thermal control device and more particularly to a thermal control device feasible for, e.g., an artificial satellite or a spacecraft.

As for spacecraft expected to navigate in a vacuum environment, thermal radiation from external surfaces is the only thermal radiation means available. The amount of thermal radiation dictates the temperature inside the spacecraft. A thermal louver has conventionally been used for maintaining temperature inside the spacecraft adequate. The thermal louver adjusts the amount of thermal radiation to the outside in accordance with temperature. Specifically, the louver assembly includes a bimetal or similar actuator for driving blades. The blades are movable to increase or decrease the effective radiation area and therefore regulate the temperature of thermal radiation surfaces, i.e., increase the amount of thermal radiation at a high temperature or reduces it at a low temperature.

However, the above thermal louver is a mechanical device including movable portion and therefore bulky and heavy. Moreover, the louver lacks in reliability due to the movable portion. In addition, the blades cannot be opened and closed more than a preselected number of times due to their limited life.

Technologies relating to the present invention are also disclosed in, e.g., Japanese Patent Laid-Open Publication Nos. 63-207799, 1-212699 and 9-58600.

US patent 5,330,708 discloses the use of bistable negative temperature coefficient (NTC) materials as a temperature dependent switch which is defined to be in a "0"-state when the material is in a first phase, and in a "1"-state when the material is in a second phase.

The article "Understanding doped V₂O₃ as a functional positive temperature coefficient material" of Hendrix et al. published in Journal of Material Science: Materials in Electronics, June 1992, UK discloses doped V₂O₃ as a positive temperature coefficient (PTC) material, whereby Cr or Al is used as dopant.

The Japanese published application JP 03088302 discloses the use of V₂O₃ doped with Cr for a thermal shock resistance in a resistor.

Furthermore, US patent 5,433,056 discloses a variable emissivity coating having an automatic response to changes in the temperature. Doped vanadium oxide is disclosed as a thermocromatic material which exhibits high thermal emittance characteristics when it is in an electrically insulating state and a low thermal emittance when it is in a metallic state.

### SUMMARY OF THE INVENTION

It is therefore an object of the present invention to provide a reliable thermal control device operable over a long period of time even in a severe environment and easy to produce.

It is another object of the present invention to provide a reliable, small size and light weight thermal control device including no movable portions. These objects are achieved by the use of perovskite Mn oxide as variable-phase substance as defined in claim 1. Preferred embodiments are defined in dependent claims 2 to 5.

In the thermal control device in accordance with the present invention, the variable-phase substance exhibiting a property of an insulator in a high temperature phase and a property of metal in a low temperature phase, and radiating a great amount of heat in a high temperature phase and a small amount of heat in the low temperature phase, controls the temperature of a desired object.

### BRIEF DESCRIPTION OF THE DRAWINGS

The above and other objects, features and advantages of the present invention will become more apparent from the following detailed description taken with the accompanying drawings in which:
FIG. 1 shows a conventional thermal louver;
FIG. 2 is a graph showing a reflection spectrum particular to a variable-phase substance La_{1-X}Sr_{X}MnO₃ applicable to the present invention;
FIG. 3 is a graph showing data representative of the thermal radiation ratio of La_{1-X}Sr_{X}MnO₃;
FIG. 4 is a graph showing data representative of the resistivity of La_{1-X}Sr_{X}MnO₃; and
FIGS. 5 and 6 respectively show a first and a second embodiment of the thermal control device in accordance with the present invention.

### DESCRIPTION OF THE PREFERRED EMBODIMENTS

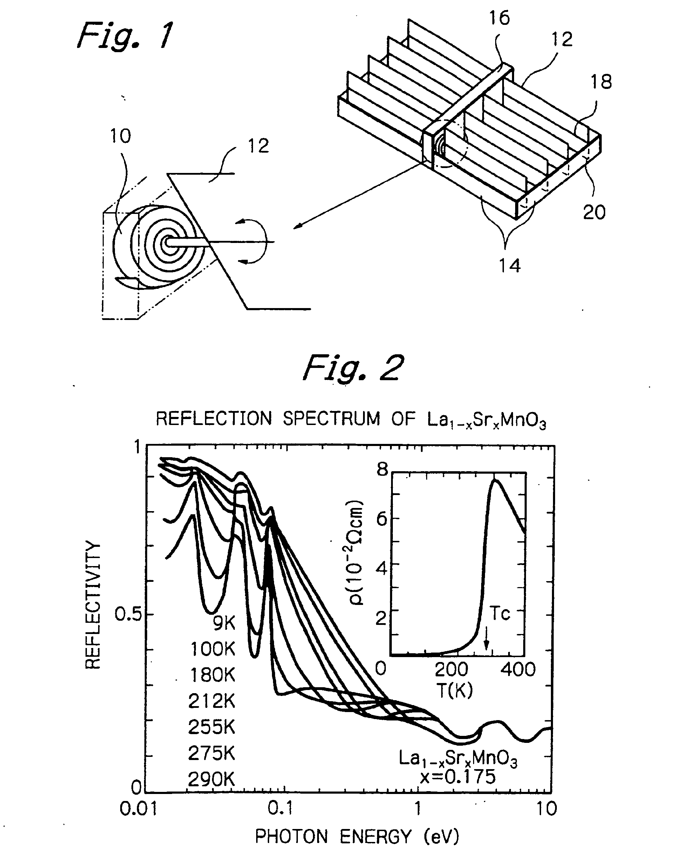

To better understand the present invention, brief reference will be made to a conventional thermal louver, shown in FIG. 1. The thermal louver to be described adjusts the amount of thermal radiation to the outside in accordance with temperature, as stated earlier. As shown, the thermal louver includes a bimetal or actuator 10 and blades 12. The bimetal 10 drives the blade 12 in order to increases or decreases the effective area and therefore the temperature of thermal radiation surfaces. There are also shown in FIG. 1 a frame 14, a bimetal housing 16, shafts 18, and bearings 20.

A thermal control device in accordance with the present invention is characterized in that it uses a thermal radiation characteristic particular to a substance itself in place of a mechanical principle. As for a spacecraft expected to navigate a vacuum environment, thermal radiation from external surfaces is the only heat radiation means available. The amount of thermal radiation dictates the temperature inside the spacecraft.

The thermal control device is accordance with the present invention is implemented by a variable-phase substance (La_{1-X}SrₓMnO₃) arranged on the heat radiation surfaces of a spacecraft. The variable-phase substance belongs to a family of oxides of perovskite Mn and undergoes phase transition around room temperature. The characteristic of this kind of substance is similar to the characteristic of metal in a low temperature phase, but similar to the characteristic of an insulator in a high temperature phase. Also, the thermal radiation ratio of the substance is low when conductivity is high, but high when conductivity is low. The substance therefore has an automatic temperature adjusting ability, i.e. automatically increases its thermal radiation ratio at high temperatures and decreases it at low temperatures. FIG. 2 shows the dependency of the resistivity and infrared reflectivity of La_{1-X}SrₓMnO₃ on temperature, reported in the past. As FIG. 2 indicates, the reflectivity noticeably changes with changes in temperature around photon energy of about 0.12 eV (10 micron meters) which is the peak of black body radiation around room temperature. The phase transition temperature is variable between 250 K and 350 K in accordance with the composition ratio x of La and Sr.

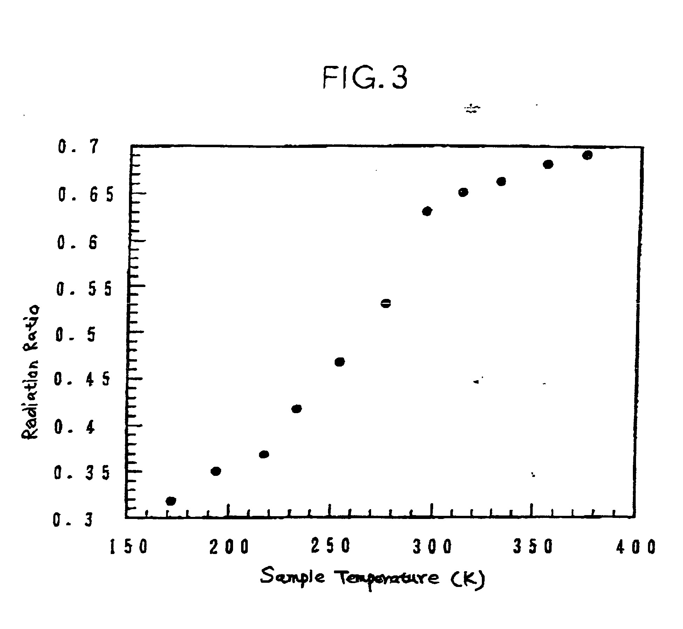

FIG. 3 shows data representative of the thermal radiation ratio of La_{0.825}Sr_{0.175}MnO₃ and measured in the range of from 170 K to 380 K. As shown, the thermal radiation ratio sharply changes in the range of from 300 K to 280 K, i.e., at the phase transition temperatures. As a result, the above substance exhibits the characteristic of metal at the low temperature side, but exhibits the characteristic of an insulator at the high temperature side.

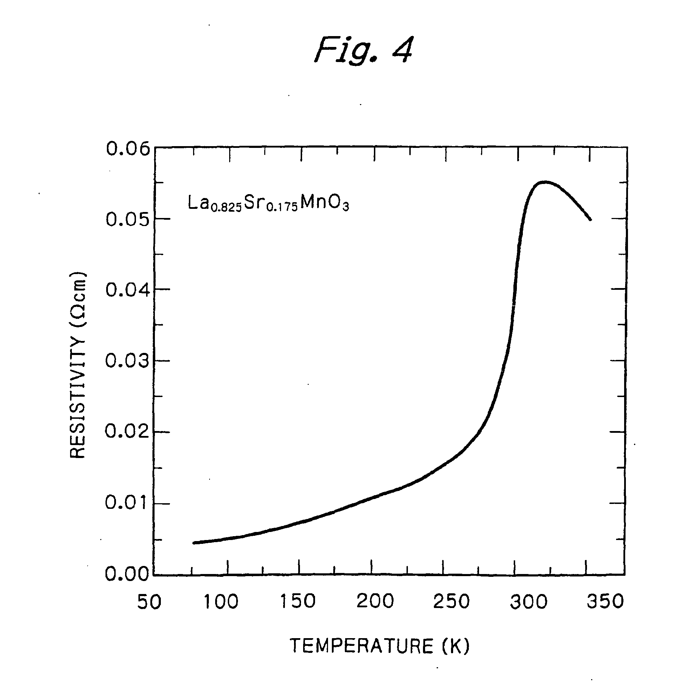

FIG. 4 shows data representative of the result of measurement of resistivity. As shown, the resistivity changes by about four times as in FIG. 2.

In the thermal control device in accordance with the present invention, the variable-phase substance should only be arranged on heat radiation surfaces in the form of a film and is therefore space-saving and light weight. Moreover, the device is highly reliable because it needs no movable portions. When the device is mounted in a position getting the sunlight, a silicon plate transparent for thermal infrared rays, but opaque for the sunlight, may be positioned in front of the variable-phase substance in order to minimize, the sunlight absorption of the device.

For the variable-phase substance use may be made of an oxide of Mn-containing perovskite represented by A₁₋ₓBₓMnO₃, where A denotes at least one of La, Pr, Nd and Sm rare earth ions, and B denotes at least one of Ca, Sr and Ba alkaline rare earth ions.

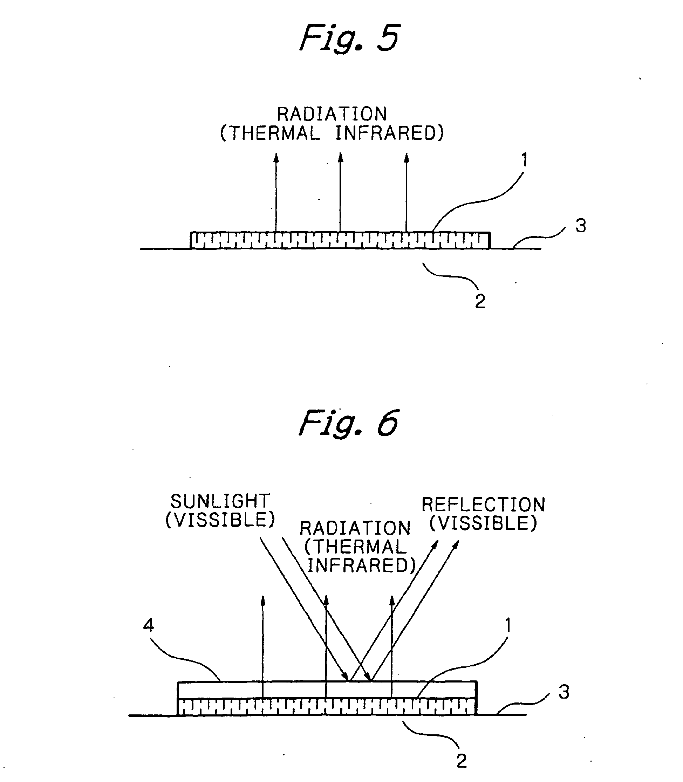

Referring to FIG. 5, a first embodiment of the thermal control device in accordance with the present invention will be described. As shown, the device is implemented by a variable-phase substance 1 for controlling the temperature of a desired object 2. The substance 1 exhibits the characteristic of an insulator in a high temperature phase, but exhibits the characteristic of metal in a low temperature phase. Also the substance 1 radiates a great amount of heat in the high temperature phase, but radiates a small amount of heat in a low temperature phase. The substance 1 is affixed to the object 2 by powder coating, evaporation, crystalline adhesion or similar affixing means. In the illustrative embodiment, the substance 1 is implemented by La_{1-X}Sr_{X}MnO₃, belonging to a family of oxides of perovskite Mn.

Specifically, the object 2 is representative of the heat radiation wall of spacecraft. The substance 1 is arranged on the surface 3 of the wall 2 in the form of a several hundred micron meter thick film. The substance 1 is thermally coupled to the surface 3 and substantially the same in temperature as the wall 2.

In operation, when the temperature of the surface 3 rises and heats the substance above the phase transition temperature then the thermal radiation ratio of the substance increases. As a result, the amount of thermal radiation to the outside environment increases and lowers the temperature of the surface 3. Conversely, when the temperature of the surface 3 drops and cools off the substance below the phase transition temperature, the beat radiation ratio of the substance 1 and therefore the amount of thermal radiation decreases, raising the temperature of the surface 3. With this mechanism, the substance 1 automatically controls the temperature of the surface 3 to a range around its phase transition temperature.

The substance 1 has a nearly cubic crystal structure and has an optical property not dependent on the orientation of the crystallographic axis. It follows that the substance 1 can be arranged on the surface 3 by anyone of conventional schemes including powder coating, evaporation, crystalline adhesion and other affixing means and the adhesion of a film implemented by a powdery phase-variable substance containing, e.g., a binder.

The illustrative embodiment is practicable only if the variable-phase substance is implemented by, e.g., an oxide of Mn-containing perovskite represented by A_{1-X}B_{X}MnO₃, where A denotes at least one of La, Pr, Nd and Sm rare earth ions, and B denotes at least one of Ca, Sr and Ba alkaline rare earth ions.

A second embodiment of the thermal control device in accordance with the present invention will be described with reference to FIG. 6. As shown, the device is also implemented by the variable-phase substance 1 for controlling the temperature of the object 2. The substance 1 exhibits the characteristic of an insulator in a high temperature phase, but exhibits the characteristic of metal in a low temperature phase, as stated earlier. In addition, the substance 1 radiates a great amount of heat in the high temperature phase, but radiates a small amount of heat in a low temperature phase, as also stated previously. In the illustrative embodiment, a silicon plate 4 transparent for infrared rays, but opaque for visible rays, is positioned on the substance 1.

As shown in FIG. 2, La_{1-X}Sr_{X}MnO₃, constituting the substance 1 has reflectively as low as about 0.2 in the sunlight wave length range (0.3 micron meter to 2.5 micron meter), i.e., it shows high absorbance to the sunlight in such a range. Therefore, when the substance is positioned in an area directly getting the sunlight, its high absorbance is increased to obstruct thermal radiation. In such a case, as shown in FIG. 6, the silicon plate 4 transparent for infrared rays, but opaque for visible rays is mounted on the front of the substance 1. This embodiment is therefore identical in principle with the first embodiment except that the silicon plate 4 reflects the sunlight.

If desired, the silicon plate 4 may be replaced with any other member, e.g., a plate or a film containing germanium so long as it can transmit infrared rays.

In summary, it will be seen that the present invention provides a small size, light weight thermal control device using an optical property particular to a substance itself in place of a mechanical principle applied to a conventional thermal louver. In addition, the device in accordance with the present invention is highly reliable and long life because it needs no movable portions which would bring about wear, fatigue and other problems.

Various modifications will become possible for those skilled in the art after receiving the teachings of the present disclosure without departing from the scope of the claims.

## Claims

1. Use of perovskite Mn oxide as variable-phase substance which exhibits the property of an insulator in a high temperature phase and the property of a metal in a low temperature phase, such that a great amount of heat is radiated in a high temperature phase and a small amount of heat is radiated in the low temperature phase, in a thermal control device.

2. Use of perovskite Mn oxide as claimed in claim 1, wherein the oxide of perovskite Mn comprises an oxide of Mn-containing perovskite represented by A₁₋ₓBₓMnO₃ where A is at least one of La, Pr, Nd and Sm rare earth ions, and B is at least one of Ca, Sr and Ba alkaline rare earth ions.

3. Use of perovskite Mn oxide as claimed in any one of the preceding claims, wherein said variable-phase substance is affixed to an object (2) by powder coating, evaporation, crystalline adhesion or adhesion of a film (1) formed of a variable-phase substance containing a binder.

4. Use of perovskite Mn oxide as claimed in any one of the preceding claims, further comprising either one of a plate and a film (4) mounted on said phase-variable substance for transmitting infrared rays and reflecting visible rays.

5. Use of perovskite Mn oxide as claimed in any one of the preceding claims, wherein the object (2) comprises either one of an artificial satellite and a spacecraft.

## Patentansprüche

1. Verwendung von Perowskit-Mn-Oxid als phasenvariable Substanz, die in einer Hochtemperaturphase die Eigenschaft eines Isolators entwickelt und in einer Niedrigtemperaturphase die Eigenschaft eines Metalls entwickelt, so daß in einer Hochtemperaturphase eine große Wärmemenge abgestrahlt wird und in der Niedrigtemperaturphase eine geringe Wärmemenge abgestrahlt wird, in einer Wärmeregelungsvorrichtung.

2. Verwendung von Perowskit-Mn-Oxid nach Anspruch 1, wobei das Oxid von Perowskit-Mn ein Oxid von Mn-haltigem Perowskit enthält, das durch A₁₋ₓBₓMnO₃ repräsentiert wird, wobei A wenigstens eines der Seltenen-Erden-Ionen La, Pr, Nd und Sm ist, und wobei B wenigstens eines der alkalischen Seltenen-Erden-Ionen Ca, Sr und Ba ist.

3. Verwendung von Perowskit-Mn-Oxid nach einem der vorstehenden Ansprüche, wobei die phasenvariable Substanz an einem Objekt (2) befestigt wird mittels Pulverbeschichten, Aufdampfen, Kristalladhäsion oder durch Ankleben eines Filmes (1), der aus einer phasenvariablen Substanz gebildet wird, die ein Bindemittel beinhaltet.

4. Verwendung von Perowskit-Mn-Oxid nach einem der vorstehenden Ansprüche, ferner umfassend entweder eine Platte oder einen Film (4), die auf der phasenvariablen Substanz angebracht sind, um Infrarotstrahlung hindurchzulassen und sichtbares Licht zu reflektieren.

5. Verwendung von Perowskit-Mn-Oxid nach einem der vorstehenden Ansprüche, wobei das Objekt (2) entweder einen künstlichen Satelliten oder ein Raumfahrzeug umfaßt.

## Revendications

1. Utilisation d'oxyde perovskite de manganèse (Mn) en tant que substance à phase variable qui présente la propriété d'un isolant dans une phase à haute température et la propriété d'un métal dans une phase à basse température, de telle sorte qu'une grande quantité de chaleur est rayonnée dans une phase à haute température et une petite quantité de chaleur est rayonnée dans la phase à basse température, dans un dispositif de contrôle thermique.

2. Utilisation d'oxyde perovskite de manganèse selon la revendication 1, dans laquelle l'oxyde perovskite de manganèse comprend un oxyde de perovskite contenant du manganèse représenté par A₁₋ₓBₓMnO₃ où A est au moins l'un parmi les ions de terres rares de La, Pr, Nd et Sm, et B est au moins l'un parmi les ions de terres rares alcalines de Ca, Sr et Ba.

3. Utilisation d'oxyde perovskite de manganèse selon l'une quelconque des revendications précédentes, dans laquelle ladite substance à phase variable est fixée à un objet (2) par revêtement de poudre, évaporation, adhérence cristalline ou adhérence d'un film (1) formé d'une substance à phase variable contenant un liant.

4. Utilisation d'oxyde perovskite de manganèse selon l'une quelconque des revendications précédentes, comprenant en outre l'un ou l'autre d'une plaque et d'un film (4) monté sur ladite substance à phase variable pour transmettre des rayons infrarouges et réfléchir des rayons visibles.

5. Utilisation d'oxyde perovskite de manganèse selon l'une quelconque des revendications précédentes, dans laquelle l'objet (2) comprend l'un ou l'autre d'un satellite artificiel et d'un engin spatial.
